## Europäisches Patentamt

## European Patent Office

## Office européen des brevets

(19)

(11) Publication number: **0 032 049**

**A2**

(12)

# EUROPEAN PATENT APPLICATION

(21) Application number: 80304722.4

(22) Date of filing: 29.12.80

(51) Int. Cl.³: **B 62 M 9/12**

(30) Priority: 29.12.79 JP 171540/79
29.12.79 JP 171541/79

(43) Date of publication of application:
15.07.81 Bulletin 81/28

(84) Designated Contracting States:
BE DE FR GB IT

(71) Applicant: SHIMANO INDUSTRIAL COMPANY LIMITED
77, 3-cho Oimatsu-cho Sakai-shi
Osaka(JP)

(72) Inventor: Nagano, Masashi
74-19, Midorigaoka
Izumi-shi, Osaka(JP)

(74) Representative: Szczuka, Jan Tymoteusz et al,
Cruikshank & Fairweather 19 Royal Exchange Square
Glasgow G1 3AE Scotland(GB)

(54) Cycle derailleur and use thereof.

(57) This invention relates to a cycle derailleur for use in switching a drive chain C from one sprocket to another of a multi-stage sprocket assembly S attached to a cycle, said derailleur comprising: a base member 1; a support member 2 mounted on said base member 1; a pair of linkage members 4,5 each pivotally connected at one end to said support member 2; and at its other end to a movable member 6; and a chain guide 7 connected to said movable member 6; said chain guide 7 being movable generally axially of said multi-stage sprocket assembly S with respect to said base member 1. In such a derailleur adjustment of the chain guide for alignment of a high or low speed sprocket results in misalignment for the other sprockets.

According to the present invention an adjusting mechanism A is provided for moving said chain guide 7 generally axially of said multi-stage sprocket assembly S with respect to said base member 1 thereby to adjust the position of said chain guide 7 with respect to said base member 1, said adjusting mechanism A having a securing means 10 for fixing said chain guide 7 in a given position to which it has been adjusted by said adjusting mechanism A.

Fig.2

CYCLE DERAILLEUR AND USE THEREOF


This invention relates to a derailleur for a cycle, and more particularly to a derailleur for a cycle in which a movable member is supported on a base member via two linkage members, the movable member carrying a chain guide which guides a drive chain to one of the sprockets of a multi-stage sprocket assembly and is movable axially of the multi-stage sprocket assembly for switching the chain between different sprockets of the assembly for changing the cycle speed.

It should be noted that in the above passage and elsewhere in this specification references to movement axially of the sprocket assembly are intended to include movement parallel to the central rotational axis of the sprocket assembly and similar expressions should be construed in corresponding manner.

Generally, touring cycles are provided with a multi-stage sprocket assembly comprising a plurality of sprockets of different diameters spaced at regular intervals and mounted rotatably on a hub shaft supported on the cycle frame, with a derailleur mounted via a base member on the cycle frame in the vicinity of the multi-stage sprocket assembly, a control wire being pulled in use of the derailleur to move a movable member of the derailleur axially of the multi-stage sprocket assembly, thereby switching the chain to a desired one of the sprockets of the multi-stage sprocket assembly with the aid of a chain guide and thus changing the cycle speed.

The linkage members of the derailleur mechanism swing relative to the base member so that the movable member and chain guide move axially of the sprockets with a stroke length corresponding to an angle of pivotal angular movement of the linkage members, for switching of the chain.

However, although the linkage members pivot with respect to the base member at substantially constant angles

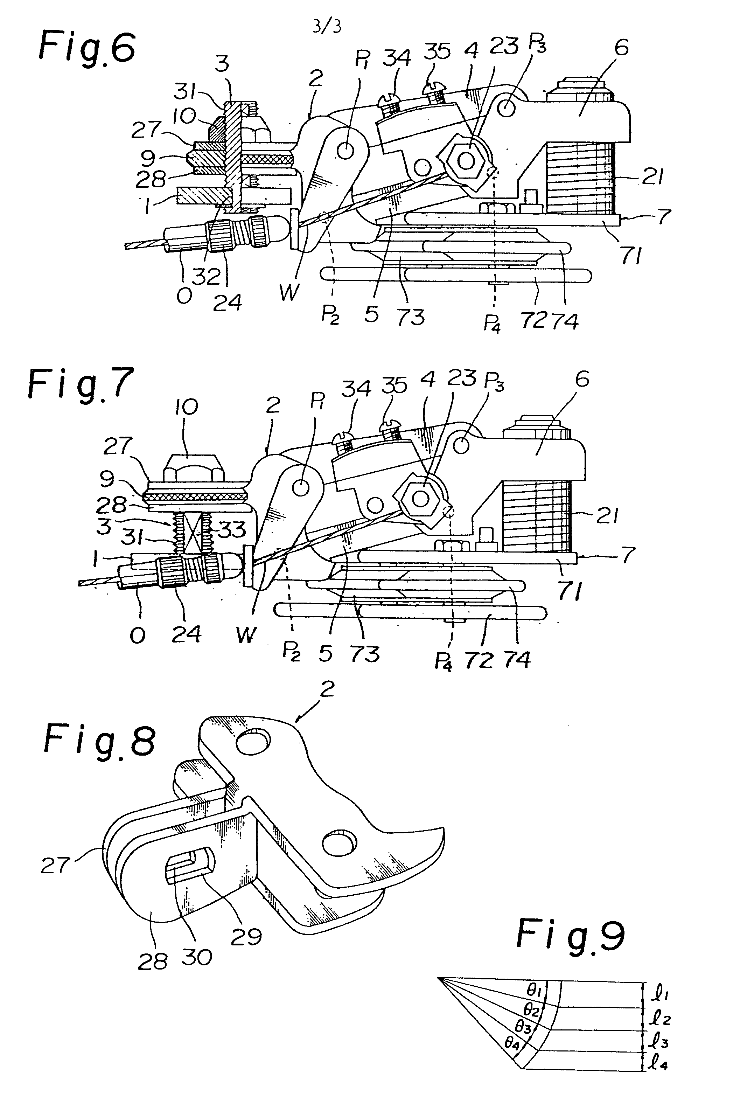

$\theta_1 - \theta_4$ as shown in Fig. 9, the movable member and chain guide move axially of the sprockets with stroke lengths $l_1 - l_4$ which are different in size between the different positions of the swinging linkage members for any given angle $\theta$. Hence, the respective angles $\theta_1 - \theta_4$ need to be carefully preset to obtain respective stroke lengths $l_1 - l_4$ which correspond to the spacing between different pairs of sprockets of the multi-stage sprocket assembly and to match the different operating positions of the pivoting linkage members with the respective sprockets.

Such a derailleur is mounted on a cycle frame via the base member which is fixed at the outer surface of a fork end of the cycle frame, while the multi-stage sprocket assembly is supported on a hub shaft mounted in the fork end. Since the multi-stage sprocket assembly is not always constant in its axial position with respect to the outer surface of the fork end, the chain guide of the derailleur fixed to the fork end, often deviates from a correct position for alignment with, for example, a high speed sprocket of the multi-stage sprocket assembly.

In order to eliminate such deviations, two adjusting screws are usually employed to define and adjust the range of movement of the chain guide at positions corresponding to the high speed sprocket and low speed sprocket ends of its range of movement. In other words, the range of pivotal movement of the linkage members between their high speed and low speed positions can be translated so that the position of the chain guide at the high speed or low speed gear change stage is matched with the position of the high speed or low speed sprocket.

However, the adjustment of the linkage members in their range of pivotal movement causes a change in the values of the respective stroke lengths $l_1 - l_4$ of the chain guide with respect to the corresponding angles $\theta_1 - \theta_4$ of pivotal movement. As a result, the chain guide, when used for switching the drive chain, shifts from its correct position relative to each of the sprockets other than the high and low speed sprockets. In the case that the range of swinging motion of the linkage members is adjusted as above, it is possible to eliminate this defect by individually adjusting each said angle of pivotal movement of the linkage members into correspondence with the required values to obtain the necessary stroke length $l_1 - l_4$. However, derailleurs which include a positioning mechanisms are not adjustable in this way. Where a control lever has scales or a positioning mechanism, the adjustment of an angle of pivotal movement of the linkage member causes a change in the angle of pivotal movement of the linkage member with respect to a constant lever stroke set by the scales or positioning mechanism, and in turn, the stroke length of the chain guide with respect to the base member. As a result, speed change efficiency is impaired.

A change of the stroke length with respect to the angle of pivotal movement of the linkage member, following adjustment of the range of pivotal movement, seriously affects the speed-change efficiency. Especially when the derailleur is provided with a positioning mechanism, there arises the problem of the stroke length of the chain guide with respect to the angle of pivotal movement of the linkage members at each speed-changing stage set by the mechanism, being changed to make difficult correct speed changing.

It is an object of the present invention to avoid or minimize one or more of the above disadvantages and in particular to provide a derailleur which is readily adjustable in the position of its chain guide even after adjustment of its position for alignment with one sprocket, usually the high speed sprocket, of the multi-stage sprocket assembly, so that the chain guide, even when it is adjusted in its position, keeps its stroke length substantially unchanged, in other words, the chain guide does not deviate from its correct axial movements relative to the multi-stage sprocket assembly during gear changing.

The present invention provides a cycle derailleur for use in switching a drive chain from one sprocket to another of a multi-stage sprocket assembly attached to a cycle, said derailleur comprising: a base member; a support member mounted on said base member; a pair of linkage members each pivotally connected at one end to said support member and at its other end to a movable member; and a chain guide connected to said movable member; characterized in that said chain guide  i  movable generally axially of said multi-stage sprocket assembly with respect to said base member; and an adjusting mechanism is provided for moving said chain guide generally axially of said multi-stage sprocket assembly with respect to said base member thereby to adjust the position of said chain guide with respect to said base member, said adjusting mechanism having a securing means for fixing said chain guide in a given position to which it has been adjusted by said adjusting mechanism.

Thus, instead of adjustment of the position of the chain guide with respect to the sprocket assembly by changing the range of pivotal movement of the linkage members as in a conventional derailleur, a derailleur of the present invention allows the chain guide to be moved axially of the multi-stage sprocket assembly with respect to the base member without changing its range of pivotal movement of the linkage members, for adjustment of the position of the chain guide, the range being effectively translated as a whole and substantially unchanged in any significant way.

In detail, the derailleur of the invention supports the chain guide for movement axially of the multi-stage sprocket assembly with respect to the base member, and incorporates an adjusting mechanism which moves the chain guide to adjust its position with respect to the base member and, in turn, its position with respect to the high speed sprocket at the multi-stage sprocket assembly, the chain guide being arranged to be fixed in its adjusted position by a fixing means included in the adjusting mechanism.

In this invention, for the purpose of moving the chain guide with respect to the base member, the chain guide is supported for movement relative to the movable member, or alternatively the support member carrying the chain guide through the linkage member and movable member, is supported for movement relative to the base member. In the latter case, a basic linkage mechanism of the derailleur comprising the support member, two linkage members and movable member, is moved as a whole relative to the base member, the chain guide being moved together with said linkage mechanism.

The aforesaid adjustment of the position of the chain guide by movement thereof relative to the base member, requires no change of the extent of the pivotal movement range of the linkage members. Hence, the chain guide, even when it is adjusted in the above described manner, is maintained essentially unchanged in its overall and individual stroke lengths, thereby being maintained accurately in position for alignment with each of the sprockets at the various gear-change positions thus ensuring a precise switching of the chain thereto.

Further preferred features and advantages of the invention will appear from the following description given by way of example of two preferred embodiments illustrated with reference to the accompanying drawings in which:

Fig. 1 is a front view of a first derailleur of the invention;

Fig. 2 is a partially cutaway bottom view of the derailleur of Fig. 1;

Fig. 3 is a bottom view thereof, showing the derailleur of Figs. 1 and 2 in use with a multi-stage sprocket assembly;

Fig. 4 is a perspective view of a movable member for the above derailleur.

Fig. 5 is a front view of a second derailleur of the invention;

Fig. 6 is a partially cutaway bottom view of the derailleur of Fig. 5;

Fig. 7 is a bottom view corresponding generally to Fig. 3 of the derailleur of Fig. 5;

Fig. 8 is a perspective view of a support member for the above derailleur;  and

Fig. 9 illustrates the relationship between pivotal movement of the linkage members and the lateral displacement of the chain guide in a conventional derailleur.

The drawings show a rear derailleur for use with a multi-stage sprocket assembly $S$ secured to a rear hub of the cycle (not shown).  The derailleur comprises essentially a base member 1 securable in use to a fork end of the cycle frame;  a support member 2 supported on the base member 1 via a support shaft 3;  a pair of linkage members 4 and 5 each pivotally connected at one end to the support member 2 by means of pins $P_1$ and $P_2$;  a movable member 6 pivotally connected to the other ends of the linkage members 4 and 5 by means of pins $P_3$ and $P_4$ respectively;  a return spring (not shown) interposed between the support member 2 and one of the linkage members 4, 5 or between the movable member 6 and one of the linkage members 4, 5;  and a chain guide 7 mounted on the movable member 6 via a support shaft 8.

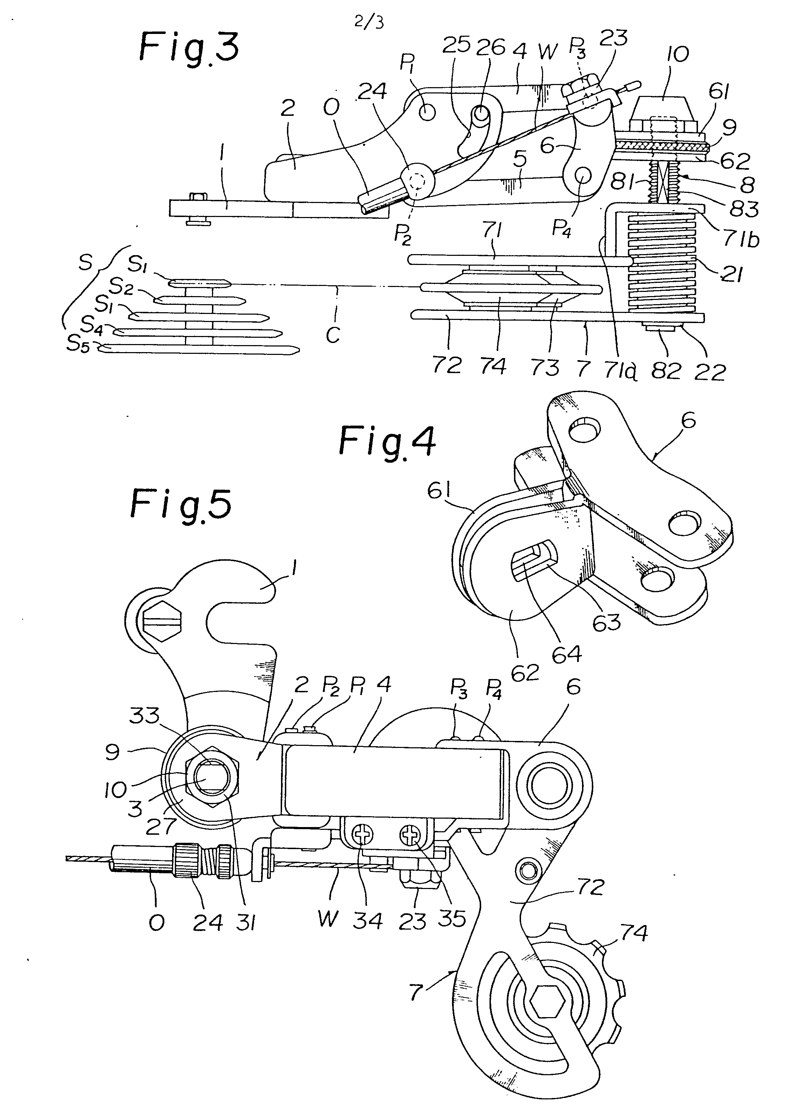

The multi-stage sprocket assembly $S$ (see Fig. 3) has five sprockets $S_1$ to $S_5$ of different diameters.  The smallest diameter and high speed sprocket $S_1$ is positioned axially outermost of the cycle in use thereof, the sprockets $S_2$ to $S_4$ of progressively increasing diameter being disposed sequentially in an axially inward direction, and the largest diameter and low speed sprocket $S_5$ being positioned axially innermost.

In the above described derailleur the chain guide 7 is mounted so as to be movable relative to the base member 1, and the derailleur incorporates an adjusting mechanism A for adjusting the position of the chain guide 7 relative to the base member 1.

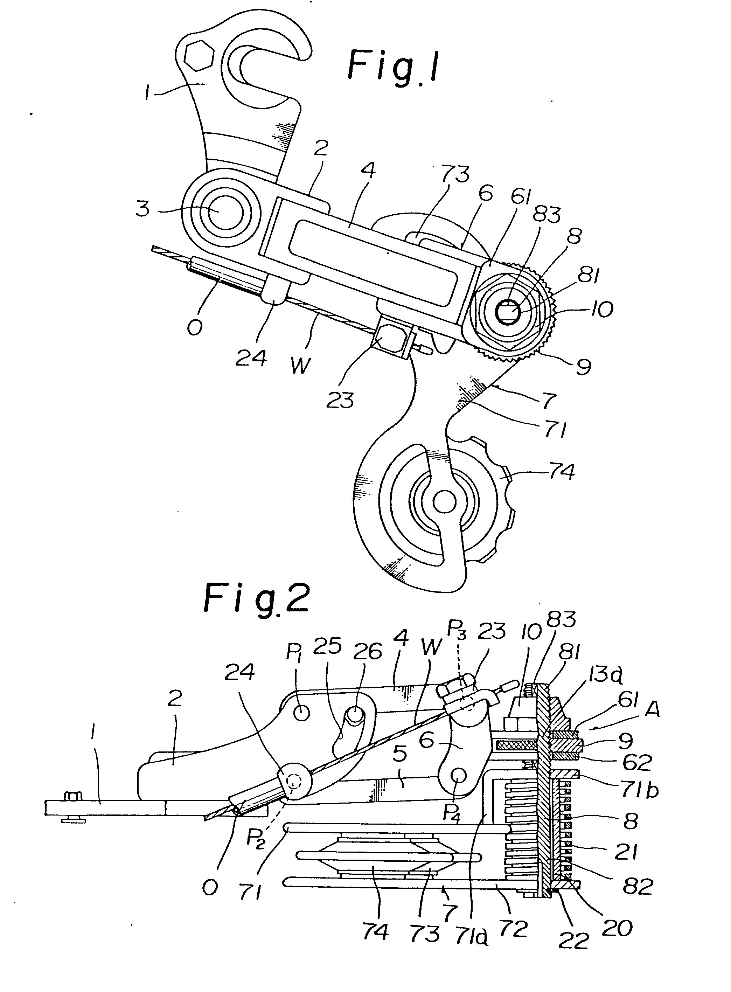

In the derailleur of Figs. 1 to 4 the chain guide 7 is supported so as to be movable relative to the movable member 6 and the adjusting mechanism A is interposed between the movable member 6 and the chain guide 7.

Specifically a pair of parallel mounting lugs 61 and 62 are provided on the movable member 6, so as to extend generally parallel to the sprockets of the sprocket assembly S. One end of a support shaft 8 is mounted in the lugs 61 and 62, as described in more detail below, so as to extend parallel to the central axis of the multi-stage sprocket assembly S and be axially movable relative to said lugs 61 and 62, whilst being non-rotatable relative thereto.

The support shaft 8 has a non-circular cross-section threaded portion 81 and a circular cross-section portion 82, the threaded portion 81 being screw threadedly engaged at a substantially intermediate portion thereof with a rotary control member 9 interposed between the lugs 61 and 62. A lock nut 10, for securing the support shaft 8 to the lugs 61 and 62, is screwed onto an end portion of the threaded portion 81 projecting outwardly from the lug 61, and the chain guide 7 is rotatably supported on the circular section portion 82.

The threaded portion 81 is made non-circular in section for the purposes of non-rotatable mounting of the support shaft 8 in the lugs 61 and 62. At the outer periphery of the threaded portion 81 are provided on opposed sides two flat faces 83 directed axially of the support shaft 8. The lugs 61 and 62, as shown in Fig. 4, have bores 63 and 64 for receiving the support shaft 8 therethrough, said bores 63 and 64 corresponding in outline to the cross-section of the non-circular portion of the support shaft 8 so that the latter locates non-rotatably therein.

The chain guide 7 is mounted on the support shaft 8, as shown in Figs. 2 and 3, and comprises a pair of opposed first and second pulley plates 71 and 72, and a guide pulley wheel 73 and a tension pulley wheel 74 are supported between said pulley plates 71 and 72. The first pulley plate 71 has an outwardly generally normally extending portion 71a and an extension 71b extending from the distal end of the normally extending portion 71a generally at right angles thereto and parallel to the second pulley plate 72. The support shaft 8 is disposed through a bore in the extension 71b and a corresponding opposed one in the second pulley plate 72 so as to rotatably support the chain guide 7.

A sleeve 20 is interposed between the opposed faces of the extension 71b of the first pulley plate 71 and the second pulley plate 72. A chain tension spring means in the form of a helical coil spring 21 is wound around the sleeve 20 and is retained at one end to the support shaft 8 through the sleeve 20 and at its other end to the second pulley plate 72. The spring 21 biases the chain guide 7 clockwise relative to the support shaft 8 (as viewed in Fig. 1) to maintain a drive chain C (shown schematically) under tension via the pulley wheels 73 and 74.

A snap ring 22 retains the end of support shaft 8 connected to the chain guide 7, a control wire engagement means 23 is mounted on the movable member 6 and secures one end of a control wire W, an outer sheath O for said wire W being retained by a holder 24 which is mounted on the support member.

A pin 26 projects laterally of one linkage member 4 and locates in an elongate arcuate slot 25, the pin 26 being freely movable therein to define a range of pivotal movement of linkage members 4 and 5. The range is set to correspond to the number of sprockets of the multi-stage sprocket assembly S.

In the above described form of construction, the control wire W is operated to move the movable member 6 and chain guide 7 axially relative to the multi-stage sprocket assembly S, thereby switching the drive chain C from one sprocket to another of the multi-stage sprocket assembly S with the tension pulley 74 and guide pulley 73 of the chain guide 7.

The movable member 6 is biased by the return spring toward one side, generally towards the high speed sprocket $S_1$ of the assembly S, i.e. into the so-called top-normal condition. The control wire W then has to be pulled to switch the chain C from the high speed stage to a lower speed stage, the return spring acting to return the chain to a higher speed stage again on reverse movement of a control lever.

When the movable member 6 is positioned in the top-normal condition, the chain guide 7, if it shifts from its position of correct alignment with respect to the high speed sprocket, has to be positionally adjusted. The adjustment is carried out by means of the adjusting mechanism A in the following manner:

First, the lock nut 10 is unscrewed and the rotary control 9 is rotated to axially drive the support shaft 8 in one direction or the other. The chain guide 7 moves together with the support shaft 8 relative to the movable member 6 in a direction generally axially of the multi-stage sprocket assembly S and is moved from the position shown in Fig. 2 to that shown in Fig. 3 relative to the base member 1. Thus the chain guide 7 can be adjusted to ensure correct alignment with the high speed sprocket $S_1$. Thereafter, the lock nut 10 is tightened again onto the support shaft 8 to secure the chain guide 7 in its adjusted position.

During the above described adjustment, the movable member 6 is not changed in its angular disposition relative to the base member 1, - only the position of the chain guide 7 with respect to the movable member 6 is changed. Consequently, the chain guide 7 moves through an unchanged length stroke when the control wire $\underline{W}$ is pulled to swing the movable member 6. This enables the drive chain $\underline{C}$ to be switched exactly between each of the sprockets $\underline{S}_1$ to $\underline{S}_5$ of the sprocket assembly $\underline{S}$.

Alternatively though the adjusting mechanism $\underline{A}$ could, as shown in Fig. 5 to 7, be interposed instead between the base member 1 and the support member 2.

In this case, the adjusting mechanism $\underline{A}$ is provided on the support shaft 3 by means of which the support member 2 is mounted on the base member 1, and the support shaft 3, which is rotatably mounted on the base member 1, is provided with a threaded portion 31 of a non-circular cross-section, with a rotary control member 9 screw threadedly engaged with the threaded portion 31 as in the first embodiment.

Also, the support member 2, as shown in Fig. 8, is provided with a pair of parallel opposed mounting lugs 27 and 28 provided with non-circular insertion bores 29 and 30, so that the support shaft 3 can extend with its non-circular section portion 31 through the insertion bores 29 and 30 and support the support member 2 so that only axial relative movement therebetween is possible. The rotary control member 9 is interposed between the lugs 27 and 28.

The rotary control member 9 is disposed between the lugs 27 and 28 prior to engagement therewith by the threaded portion 31 of the inserted support shaft 3. Thereafter, when the lugs 27 and 28 are in a desired position with respect to the support shaft 3, a lock nut 10 is screwed on the support shaft 3 to secure the lugs 27 and 28 thereto. In other respects the support shaft is formed substantially similarly to the support shaft 8 of the first embodiment with a circular section portion 32 and flat faces on opposite sides of the threaded non-circular section portion 31. This form of construction, as in the case of the first embodiment, makes
it possible to operate the rotary control member 9 for
adjusting the position of the chain guide 7 with respect to
the base member 1.

This adjustment, in comparison with the previous.
embodiment, differs therefrom in that the linkage mechanism
comprising the support member 2, linkage members 4 and 5,
and movable member 6, moves together as a whole relative to
the base member 1. The position of chain guide 7 with respect
to the base member 1, and, in turn, to the multi-stage sprocket
assembly S, can be adjusted, but the position of the movable
member 6 with respect to the support member 2, in other words,
the angular disposition of the respective linkage members 4
and 5 with respect to the support member 2, is not changed.
Hence, the stroke length of the movable member 6 is not changed
with respect to a given angle of pivotal movement of the
respective linkage members 4 and 5 corresponding to each speed
change stage. In other words, a stroke length of the
respective chain guide and tension pulley wheels 73 and 74,
is not changed but made constant as previously set, thereby
ensuring an accurate switching of the chain to a desired one
of the sprockets of the sprocket assembly S.

In Figs. 5 to 7 are shown adjusting screws 34, 35
on the linkage member 4. The screws 34 and 35 limit the
range of pivotal movement of the respective linkage members
4 and 5, and adjust the range to match the number of sprockets
of the multi-stage sprocket assembly S. Alternatively, in
the case of a derailleur which does not require adjustment of
the range of pivotal movement of the linkage members due to
the fixed number of speed-change stages, the adjusting screws
34, 35 may be replaced by an elongate slot provided in either
one of two relatively movable members and a pin on the other,
thereby restricting the range of pivotal movement of the
respective linkage members 4 and 5.

Alternatively, in place of the pairs of mounting lugs 61 and 62, and 27 and 28, of the two embodiments, there could be used only single lugs with the rotary control member 9 being sandwiched between a said lug and the lock nut 10.

As will be apparent from the above, the cycle derailleur of the invention is so constructed that the chain guide is supported with respect to the base member so as to be movable axially of the multi-stage sprocket assembly, the chain guide being axially moved by the adjusting mechanism, for positional adjustment relative to the base member. Hence, even when the chain guide is positionally adjusted the stroke length required for changing speed is not. Thus accurate positioning relative to each of the sprockets of the multi-stage sprocket assembly is maintained and an exact switching of the chain to each sprocket ensured.

## CLAIMS

1. A cycle derailleur for use in switching a drive chain (C) from one sprocket to another of a multi-stage sprocket assembly (S) attached to a cycle, said derailleur comprising: a base member (1); a support member (2) mounted on said base member (1); a pair of linkage members (4,5) each pivotally connected at one end to said support member (2); and at its other end to a movable member (6); and a chain guide (7) connected to said movable member (6); characterized in that said chain guide (7) is movable generally axially of said multi-stage sprocket assembly (S) with respect to said base member (1); and an adjusting mechanism (A) is provided for moving said chain guide (7) generally axially of said multi-stage sprocket assembly (S) with respect to said base member (1) thereby to adjust the position of said chain guide (7) with respect to said base member (1), said adjusting mechanism (A) having a securing means (10) for fixing said chain guide (7) in a given position to which it has been adjusted by said adjusting mechanism (A).

2. A derailleur according to Claim 1, wherein said adjusting mechanism (A) is disposed for acting between said movable member (6) and said chain guide (7).

3. A derailleur according to Claim 2, wherein said movable member (6) has at least one mounting lug (61,62), and a support shaft (8) extending generally parallel to the central rotational axis of said multi-stage sprocket assembly (S) is supported on said mounting lug (61,62) for movement axially with respect to said mounting lug (61,62), only, said support shaft (8) having a non-circular cross-section threaded portion (81) and a circular cross-section portion (82), said threaded portion (81) being screw threadedly engaged with a rotary control member (9) and screw threadedly engaged at its free end with a said securing means in the form of a lock nut (10) for securing said support shaft (8) to said mounting lug (61, 62) said circular cross-section portion (82) rotatably supporting said chain guide (7).

4. A derailleur according to Claim 3, wherein said chain guide (7) comprises a pair of parallel opposed first and second pulley plates (71,72); a guide pulley wheel (73) and a tension pulley wheel (74) rotatably supported between said pulley plates (71,72), said first pulley plate (71) having an outwardly, generally normally extending portion 71a) and an extension (71b) extending from the distal end of said normally extending portion (71a) generally at right angles thereto and parallel to said second pulley plate (72) said support shaft (8) extending through a bore in said extension (71b)· and a corresponding opposed one in said second pulley plate (72), so as to rotatably support said chain guide; and a chain tension spring (21) interposed between said extension (71b) and said second pulley plate (72) and supported on said support shaft (8).

5. A derailleur according to Claim 1, wherein said adjusting mechanism (A) is disposed for acting between said base member (1) and said support member (2).

6. A derailleur according to Claim 5, wherein said support member (2) has at least one mounting lug (27, 28) and said base member (1) has a support shaft (3) extending parallel to the central rotational axis of said multi-stage sprocket assembly (S), said support shaft (3) being rotatably supported on said base member (1), supporting said support member (2) for movement axially of said support shaft (3),only, and having a non-circular cross-section threaded portion, said threaded portion (33) being screw threadedly engaged with a rotary control member (9) and screw threadedly engaged at its free end with a said securing means in the form of a lock nut (10) for securing said support shaft (3) to said mounting lug (61, 62).

7. A derailleur according to any one of Claims 3 to 6 wherein a pair of parallel opposed mounting lugs (61,62,27,28) is provided; said lugs (61,62,27,28) having aligned apertures (29,30) of non-circular outline corresponding to the non-circular cross-section of the threaded portion (81,33) for non-rotatable location of the latter therein.

8.   A derailleur according to any one of Claims 3 to 7 wherein said non-circular cross-section is generally circular but with a pair of parallel flats (83) on opposed sides thereof.

9.   A derailleur according to any one of Claims 1 to 8 when mounted on a cycle having a multi-stage sprocket assembly (S), in the vicinity of said assembly (S).

Fig.1

Fig.2

Fig.3

Fig.4

Fig.5

0032049

2/3

# Fig.6

# Fig.7

# Fig.8

# Fig.9